Europäisches Patentamt

European Patent Office

Office européen des brevets

(11) Numéro de publication: **0 136 219**
A1

(12) **DEMANDE DE BREVET EUROPEEN**

(21) Numéro de dépôt: **84401714.5**

(51) Int. Cl.⁴: **B 60 F 1/04**

(22) Date de dépôt: **24.08.84**

(30) Priorité: **25.08.83 FR 8313859**

(43) Date de publication de la demande: **03.04.85**
**Bulletin 85/14**

(84) Etats contractants désignés: **AT BE CH DE FR GB IT LI LU NL SE**

(71) Demandeur: **CREUSOT-LOIRE, 42 rue d'Anjou, F-75008 Paris (FR)**

(72) Inventeur: **Galin, Gilbert, 32 Place de la Liberté, F-42400 Saint-Chamond (FR)**
Inventeur: **Guillaume, Jean, 69 boulevard Saint-Michel, F-75005 Paris (FR)**

(74) Mandataire: **Karmin, Roger et al, Cabinet MONNIER 150, cours Lafayette, F-69003 Lyon (FR)**

(54) **Engin mobile hydride rail-route.**

(57) Engin mobile pouvant être utilisé soit en engin automoteur routier tout-terrain, par exemple en grue automotrice tout-terrain, soit en véhicule ferroviaire, par exemple en grue ferroviaire.

Il comporte un engin automoteur routier (7), un premier véhicule porteur ferroviaire (41), un second véhicule porteur ferroviaire (42), et des moyens (8) de fixation rigide et amovible de l'engin automoteur routier entre les deux véhicules porteurs, ledit engin automoteur routier (7) étant alors soulevé au-dessus de la voie ferrée.

## Engin mobile hybride rail-route

La présente invention se rapporte à un engin mobile d'un type entièrement nouveau, pouvant être utilisé soit en engin automoteur routier tout-terrain, tel que par exemple en grue automotrice tout-terrain, soit en véhicule ferroviaire, tel que par exemple en grue ferroviaire, un tel engin hybride pouvant par exemple être utilisé pour le dégagement des voies ferrées à la suite d'un déraillement de train.

Les grues ferroviaires existant à l'heure actuelle ne peuvent se déplacer que sur rails de sorte que l'on ne peut accéder aux lieux d'un accident que si la voie est disponible et en bon état. D'autre part, elles ne peuvent pas être utilisées pour d'autres chantiers que ceux accessibles à partir d'une voie ferrée, donc extrêmement limités en nombre.

Leur performance étant de l'ordre de 100 tonnes, leur coût est élevé et l'amortissement du matériel très difficile étant donné le peu de services rendus.

D'autre part, l'utilisation d'une voie libre par la grue ferroviaire entraîne l'obstruction par celle-ci de cette voie libre pour l'évacuation ou pour le transfert de matériels de secours ou de dépannage.

Enfin, une telle grue ferroviaire ne peut pas prendre des positions de travail relatives à la charge très variées, étant limitée par les positions imposées par les rails.

On connaît par ailleurs les grues automotrices tout-terrain, telles que les grues sur pneus vendues par la demanderesse sous la référence "Pinguély TT", qui peuvent travailler sur n'importe quel chantier, et manipuler des charges très élevées dans les positions les plus variées. Leur vitesse de déplacement sur route est malheureusement limitée à 30 km/h environ, alors qu'une grue ferroviaire est susceptible de se déplacer à 120km/h environ, et donc de se trouver rapidement sur les lieux d'un accident.

Ces grues automotrices tout-terrain, lorsqu'elles sont de puissance suffisante pour pouvoir manipuler des locomotives et des wagons, sont de dimensions prohibitives pour pouvoir être transportées sur un wagon, de sorte que le transport par voie routière reste le seul possible à l'heure actuelle.

L'engin mobile hybride de l'invention présente les avantages à la fois des engins ferroviaires et des engins automoteurs routiers ci-dessus mentionnés, sans en présenter les inconvénients répertoriés ci-dessus.

Appliqué à un engin à grue, il peut donc :

- être utilisé sur pneumatiques ou chenilles comme un engin de travaux publics standard se déplaçant par ses moyens propres,

- être à même de se déplacer très rapidement sur voie ferrée d'un chantier à un autre, ou d'une ville à une autre, très éloignés, à grande vitesse (de l'ordre de 120 km/heure),

- en cas d'accident ferroviaire, être transporté rapidement sur les lieux par voie ferrée,

- en cas d'accident ferroviaire, être transporté rapidement à proximité des lieux de l'accident, et terminer le parcours sur ses pneumatiques ou chenilles dans le cas où les voies ne seraient pas disponibles jusqu'au lieu même de l'accident.

On peut en outre libérer la voie qui aurait normalement été utilisée par la grue ferroviaire, en laissant par exemple à la gare la plus proche les accessoires ferroviaires amovibles équipant l'engin de l'invention (voir ci-après).

Sur le chantier lui-même, on a la possibilité d'utiliser l'engin de l'invention sur ses pneus ou chenilles avec une position relative par rapport à la charge à soulever très variée alors que, comme on l'a vu ci-dessus, une grue ferroviaire classique est limitée aux positions imposées par les rails.

L'engin mobile de l'invention est caractérisé en ce qu'il comporte :

- un engin automoteur routier,

- un premier véhicule porteur ferroviaire,

- des premiers moyens de fixation rigide et amovible de la partie avant du châssis dudit engin automoteur routier sur la partie arrière du châssis dudit premier véhicule porteur ferroviaire,

- un second véhicule porteur ferroviaire,

- des seconds moyens de fixation rigide et amovible de la partie arrière du châssis dudit engin automoteur routier sur la partie avant du châssis dudit second véhicule porteur ferroviaire,

lesdits premiers et seconds moyens étant agencés sur ledit engin automoteur routier et sur lesdits véhicules porteurs ferroviaires de façon que ledit engin automoteur routier soit soulevé au-dessus de la voie ferrée lorsqu'il est fixé sur lesdits véhicules porteurs ferroviaires.

Avantageusement par ailleurs, l'engin mobile de l'invention est en outre caractérisé en ce que ledit engin automoteur routier est équipé de moyens autonomes de levage et mise en place de celui-ci sur lesdits véhicules porteurs ferroviaires et vice-versa.

L'invention sera mieux comprise à l'aide de la description suivante d'un exemple de réalisation en référence aux dessins annexés dans lesquels :

- la figure 1 est une vue latérale schématique d'ensemble de la grue mobile hybride de l'invention,

- la figure 2 est une vue de dessus partielle de la grue de l'invention,

- la figure 3 montre schématiquement la première phase de mise en place d'une des extrémités de la grue automotrice sur un des véhicules porteurs ferroviaires,

- la figure 4 est une vue latérale plus détaillée de l'accouplement entre ladite extrémité sur ledit véhicule porteur ferroviaire,

- la figure 5 est une vue en perspective du dispositif d'accouplement,

- la figure 6 est une vue suivant la direction F de la figure 4 du dispositif de mise en place et d'accouplement de ladite extrémité sur ledit véhicule porteur ferroviaire,

- la figure 6a est une vue de détail en section selon la direction ZZ de la figure 6.

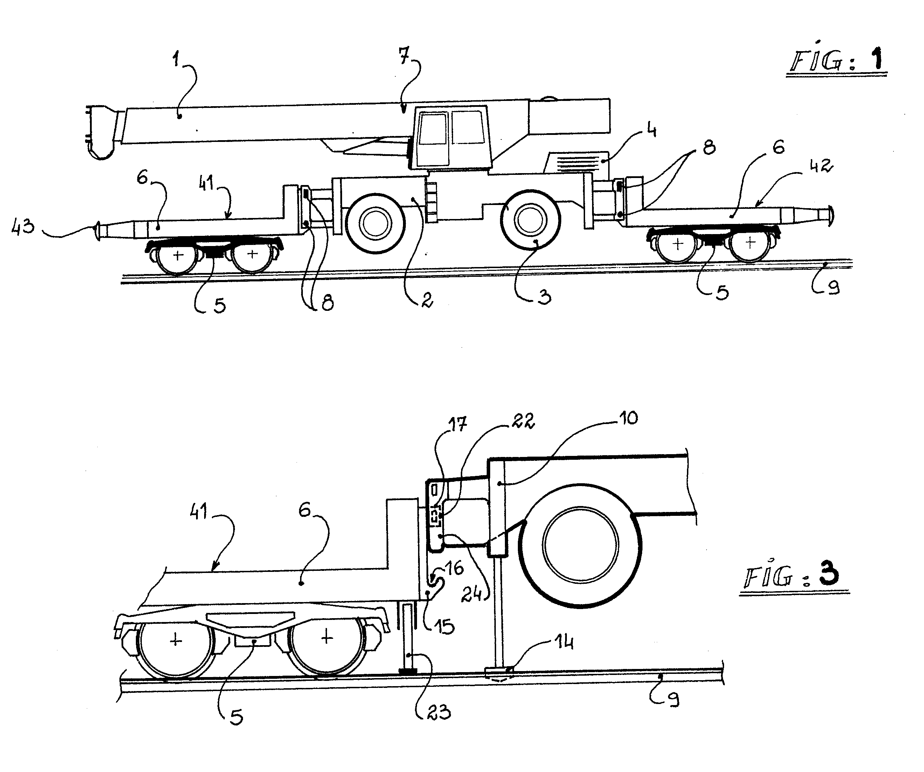

En se reportant tout d'abord à la figure 1, on y reconnaît immédiatement un ensemble 7 constituant une grue automotrice tout-terrain classique, constituée principalement, comme le représente la figure, par une partie grue et sa flèche 1, une partie châssis 2, avec roues directrices sur pneumatiques 3 et moteur de traction 4.

Conformément à l'invention, la grue automotrice 7 est incluse, de façon rigide et amovible grâce à un dispositif d'attache 8, dans un convoi ferroviaire soulevant la grue 7 au-dessus du sol à l'aide de deux véhicules porteurs ferroviaires avant 41 et arrière 42.

Comme représenté sur le dessin, les véhicules porteurs ferroviaires 41 et 42 comportent chacun, outre le dispositif d'accouplement rigide et amovible 8 qui sera décrit en détails ci-après, un boggie 5 à deux essieux sur lequel est fixé un plateau-support 6 équipé de dispositifs d'attache et de tamponnage 43 classiques, l'ensemble pouvant ainsi rouler à relativement grande vitesse sur les rails 9.

Chaque plateau-support 6 est relié à son boggie 5 par des moyens classiques et normalisés, par exemple à l'aide d'une rotule et d'un axe traversant cette rotule avec jeu, comme c'est par exemple le cas pour les wagons plats courts à plate-forme surbaissée pour transport de transformateurs, série Uais, utilisés par la Société Nationale des Chemins de Fer Français.

Accessoirement, afin de pouvoir éventuellement déplacer l'ensemble par ses propres moyens, l'un des véhicules 41 ou 42, ou les deux, peut être automoteur ; ou bien, le moteur de traction 4 de la grue 7 peut être, par des moyens classiques utilisés couramment par la Société Nationale des Chemins de Fer Français, accouplé hydrauliquement à l'un des boggies 5.

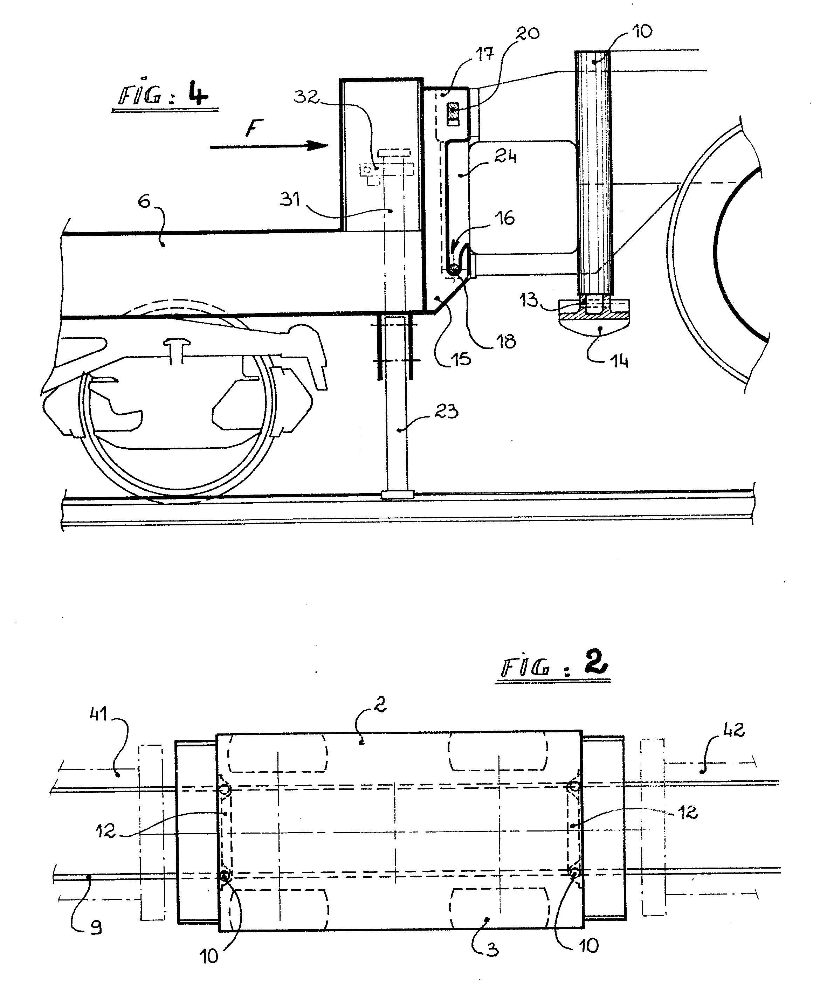

Le dispositif d'accouplement et de désaccouplement de la grue automotrice sur pneus 7 et son fonctionnement seront maintenant décrits en référence aux figures 2 à 6a.

On remarquera que, dans l'exemple décrit, la grue 7 s'accouple et se désaccouple avantageusement par ses moyens propres.

Pour réaliser l'opération d'accouplement, les deux véhicules 41, 42 sont d'abord suffisamment éloignés par poussage manuel pour que la grue roulant entre les deux boggies sur ses pneumatiques soit conduite de façon à ce que son axe longituddinal soit à peu près confondu avec l'axe médian de la voie ferrée.

L'opération de mise en place est facilitée par un opérateur guide, placé sur la voie, donnant des indications de conduite au chauffeur, au moyen de signes, l'axe longitudinal des rails étant matérialisé de façon très visible à l'avant et à l'arrière de la grue par des repères, en couleur par exemple, prévus à cet effet à l'écartement exact de la voie.

La grue centrée visuellement est alors stoppée, l'opération suivante consistant à centrer mécaniquement et de façon précise la grue par rapport aux rails.

Pour ce faire, quatre vérins double-effet à commande hydraulique 10 sont fixés au châssis de la grue, deux à l'avant de la grue et deux à l'arrière, de telle manière que l'axe 11 de chacun des vérins passe par l'axe de symétrie du profil en coupe transversale du rail 9.

Deux traverses 12 relient les vérins deux à deux par l'intermédiaire des axes 13, et comportent à leurs extrémités des appuis 14 dont la forme est telle que, en agissant sur les vérins 10 pour faire descendre la traverse 12 au contact des rails 9, la grue se trouve soulevée et centrée avec une grande précision par rapport aux rails 9. Les quatre vérins 10 étant commandés chacun à leur course maximum, la grue se trouve dans une position voulue en hauteur, parfaitement parallèle au plan déterminé par les deux faces d'appui des rails et parfaitement centrée par rapport à ces derniers.

5

L'opération suivante consiste à venir accoupler les deux véhicules 41, 42 situés respectivement à l'avant et à l'arrière de la grue sur les mêmes rails, à l'avant et à l'arrière du châssis de la grue aménagé à cet effet.

Pour ce faire, chacun des deux boggies 5 est surmonté d'un plateau 6 fixé comme précisé ci-dessus par des moyens classiques connus et utilisés par les compagnies ferroviaires, comportant à une extrémité des moyens connus et normalisés de tamponnage 43 et d'attelage et à l'autre extrémité, deux paliers cylindriques inférieurs 15, ouverts à leur partie supérieure 16, et deux paliers en forme de tenon 17, à alésages rectangulaires et coniques 20 à la partie supérieure.

Les pare-chocs avant 24 et arrière de la grue comportent d'une part deux axes inamovibles 18, géométriquement disposés pour être logés dans les paliers ouverts 15, à la partie inférieure, et d'autre part, deux paliers en forme de chape 19, à alésages rectangulaires et coniques 21, géométriquement disposés pour recevoir les paliers 17 et pour que les alésages rectangulaires et coniques 20 et 21 soient en concordance.

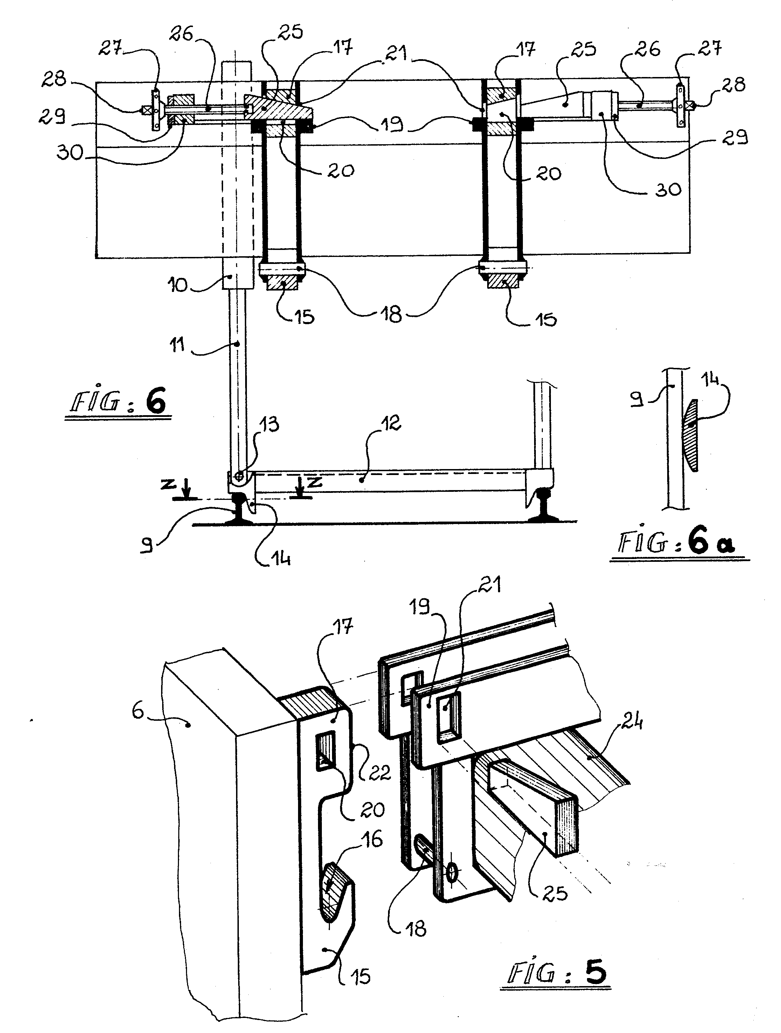

Les deux véhicules 41, 42 sont donc poussés manuellement pour venir en contact avec l'avant et l'arrière de la grue dans une position relative telle que représentée sur la figure 3, la face extérieure 22 du palier supérieur, étant en contact avec le pare-choc de la grue 24.

Un dispositif à deux béquilles de soutien classiques 23 est mis en place en appui sur les rails pour maintenir la position du boggie pendant toute l'opération, restant bien entendu que chaque boggie comporte, de manière classique, son système propre de freinage ou de calage.

La figure 3 représente la partie avant de la grue, la représentation de la partie arrière serait rigoureusement la même et symétrique.

Les quatre vérins 10 sont alors commandés simultanément pour faire rentrer les tiges et baisser le niveau de la grue de telle façon que leurs courses simultanées soient rigoureusement les mêmes, de sorte que la grue se maintienne à chaque instant dans sa position parallèle aux rails.

Les axes 18 descendent alors dans les paliers 15 par l'ouverture 16, jusqu'à venir en contact avec l'alésage inférieur du palier 15, créant ainsi une articulation autour de laquelle, sous l'effet du poids de la grue, les deux parties supérieures du véhicule 41 et de la grue vont avoir tendance à se rapprocher jusqu'à ce que la face extérieure 22 du palier 17 soit en contact avec le pare-choc 24 de la grue, position stable maintenue par l'appui effectif des béquilles 23 sur les rails.

6

L'opération suivante consiste à verrouiller l'ensemble de la charnière ainsi créée, et pour ce faire, une clavette conique 25 de section rectangulaire compatible avec les alésages 20 et 21 sera introduite dans ces derniers par le moyen par exemple d'une vis de commande 26, son volant d'approche 27, et le carré de serrage 28, adaptés à un outillage manuel classique.

Les jeux entre l'axe conique 25 et les alésages 20 et 21 sont tels que les faces inclinées de la clavette 25 et de l'alésage 20 étant en contact, la face opposée de la clavette 25 soit en contact avec la face inférieure de l'alésage 21, le mouvement de pénétration de la clavette 25 tendant à faire remonter le palier 17 solidaire du véhicule 41 par rapport au palier 19 solidaire de la grue 7.

De ce fait, l'axe 18 est maintenu en contact serré dans le palier 15 et la clavette 25 interdit l'ouverture de la charnière autour de l'axe 18, ainsi que tout mouvement vertical relatif de la grue par rapport au boggie.

Les quatre clavettes, deux à l'avant et deux à l'arrière de la grue, puisque deux pour chacun des véhicules 41 et 42, seront maintenues serrées à force par un contre-écrou 29, prenant appui sur les écrous 30, solidaires des pare-chocs de la grue.

Il suffit maintenant de soulever très peu la grue par les vérins 10 pour soulever également très peu les plateaux 6 ce qui permet d'enlever les béquilles 23 et les mettre par exemple dans une position de repos 31 en les fixant par la clavette 32.

L'éclipsage total des vérins 10 amène l'ensemble dans la position de la figure 1, où la grue est supportée à l'avant et à l'arrière par les deux plateaux 6 et forme ainsi un ensemble indéformable analogue à un wagon équipé de ses deux boggies 5.

Il reste bien entendu que l'opération de désaccouplement se fait de la même façon par des moyens identiques à ceux venant d'être décrits mais dans un ordre inverse.

## REVENDICATIONS

1.- Engin mobile,

caractérisé en ce qu'il comporte :

- un engin automoteur routier (7),

- un premier véhicule porteur ferroviaire (41),

- des premiers moyens (8) de fixation rigide et amovible de la partie avant du châssis dudit engin automoteur routier sur la partie arrière du châssis dudit premier véhicule porteur ferroviaire,

- un second véhicule porteur ferroviaire (42),

- des seconds moyens de fixation rigide et amovible de la partie arrière du châssis dudit engin automoteur routier sur la partie avant du châssis dudit second véhicule porteur ferroviaire,

lesdits premiers et seconds moyens étant agencés sur ledit engin automoteur routier et sur lesdits véhicules porteurs ferroviaires de façon que ledit engin automoteur routier soit soulevé au-dessus de la voie ferrée lorsqu'il est fixé sur lesdits véhicules porteurs ferroviaires.

2.- Engin mobile selon la revendication 1, caractérisé en ce que ledit engin automoteur routier est équipé de moyens autonomes (10) de levage et mise en place, et vice-versa, de celui-ci sur lesdits véhicules porteurs ferroviaires.

FIG: 1

FIG: 3

FIG: 4

F

32

17

20

10

31

6

24

16

13

14

15

18

23

FIG: 2

41

2

42

12

12

9

10

3

10

0136219

3/3

_FIG: 6_

_FIG: 6a_

_FIG: 5_

0136219

Office européen
des brevets

**RAPPORT DE RECHERCHE EUROPEENNE**

Numéro de la demande

EP 84 40 1714

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 877 390 (WALLACE)<br>* Colonne 3, lignes 41-46; colonne 4, ligne 64 - colonne 5, ligne 40; colonne 7, lignes 38-56; figures 1,2,5 * | 1,2 | B 60 F 1/04 |
| | --- | | |
| A | DE-A-1 941 881 (TITTELBACH)<br>* Page 2, lignes 21-23; figure 1 * | 1 | |
| | --- | | |
| A | FR-A-1 598 994 (PERROT) | | |
| | ----- | | |

DOMAINES TECHNIQUES
RECHERCHES (Int. Cl.4)

B 60 F 1/00
B 61 D 15/00
B 61 D 3/00
B 61 K 5/00

Le présent rapport de recherche a été établi pour toutes les revendications

| Lieu de la recherche | Date d'achèvement de la recherche | Examinateur |
|---|---|---|
| LA HAYE | 16-11-1984 | OSBORNE J. |